# EUROPEAN PATENT APPLICATION

(11) **EP 3 001 896 A1**
(43) Date of publication of application: **06.04.2016**
(21) Application number: 15188084.6
(22) Date of filing: 02.10.2015
(51) Int. Cl.: A01F 29/00, A01K 5/00, A01F 29/04

(54) **STRAW BALE BREAKER FOR BREAKING UP AND PARTIALLY DIVIDING BIOMASS MATERIAL**

(30) Priority: 03.10.2014 DK 201400569
(71) Applicant: Maskinfabrikken Cormall A/S, 6400 Sønderborg (DK)
(72) Inventor: HANSEN, Jens J., 6400 Sønderborg (DK)
(74) Representative: Zacco Denmark A/S

(57) **Abstract**

A straw bale breaker is described for breaking up and partially dividing biomass material (1), designed with a horizontal roller (2) where the straw (1) is conveyed over the roller (2) and is broken up on the rear side of the roller (2) where the straw (1) is led down through a preferably resiliently supported counter blade (3). After the material has passed by the counter blade (3), there is provided an opening (4) where the straw can leave the straw bale breaker.

The foreign bodies which are released during the break-up process can fall down through the roller (2) and down to the bottom of the breaker, from here these foreign bodies are conveyed upwards and out through an opening (5) placed under the area where the material (1) enters into the straw bale breaker.

## Description

The invention relates to a straw bale breaker for breaking up and partially dividing biomass material such as wheat straw, rape straw or the like packed together in straw bales being square, rectangular or round.

The British patent application GB 1 594 744 teaches a straw bale breaker according to the preamble of claim 1 for breaking up straw or the like in bales, wherein the straw bale breaker can be provided with a backstop drum arranged in parallel to the breaker roller and between the straw bale and the highest point of the roller for preventing the whole bale from being lifted when in contact with the breaker roller and excessive lumps of straw from being drawn around by the breaker roller.

The present invention differs from prior art in such a way that the straw bale breaker is provided with a feeding device being configured for conveying the material over the breaker roller as, on the rear side thereof, there is/are arranged one or more stationary counter blades, which the straw will be pushed through by the dead weight of the biomass material, in particular straw, and the breaker knives of the roller during operation of the straw bale breaker.

The material is fed into one side of the machine from a feeding system and is guided towards a horizontal breaker roller which is preferably formed as an auger conveyor, where, on the outer side of the auger's windings, breaker knives are mounted, pulling the straw over the roller.

The auger is formed with a smaller pitch than normally on an auger conveyor so as to obtain a more straight angle on the breaker knives and so as to prevent transportation along the auger for which an auger is normally constructed.

On the other side of the breaker roller, the straw is retained by stationary counter blades which are preferably resiliently supported so that larger lumps of material, impurities such as stones, wood, iron or the like are able to pass by the counter blades without this causing any blockage, damage or breaking off of knives on the breaker roller. On the rear side of the counter blades, an opening is provided where the biomass material, in particular straw, that has been broken up and partially divided is removed. From here the material can be conveyed further/collected by means of conveyor belts, augers or the like. A combination of the dead weight of the straw down on the counter blades and the breaker knives carrying away the straw ensures that the process keeps on running. The material which does not fall out through the opening is carried away once more by the breaker roller.

During the break-up process, stones, sand, gravel and other impurities, which fall down through the breaker roller and onto the bottom, are released and are now conveyed back to the inlet where the material enters into the device. Beneath the bottom upon which the material enters into the device, there is preferably provided an opening through which stones and the like can fall out.

Other similar techniques are equipped with either vertically or horizontally arranged breaker rollers. This invention relates to straw bale breakers having horizontal rollers. Either a very large roller or more rollers lying above each other is/are located on the well-known horizontal breaker rollers. The mode of operation of these well-known breakers is driven by the feeding device in such a way that it pushes the material against the breaker rollers.

By the invention, the break-up process itself is moved to the opposite side of the roller, enabling the material to escape upwards, whereas a long row of bales are located in traditional models, pushing against the roller. By the invention, the break-up process is jointly driven by the dead weight of the material. i.e. the straw and the breaking knives of the roller. The invention can further protect against blockages by means of its flexible counter blade(s). The invention can be fitted with an installed stone trap function which operates in such a way that the material is conveyed back to the bottom of the straw bale breaker by movement of the rotating roller to the region where the material enters into the straw bale breaker.

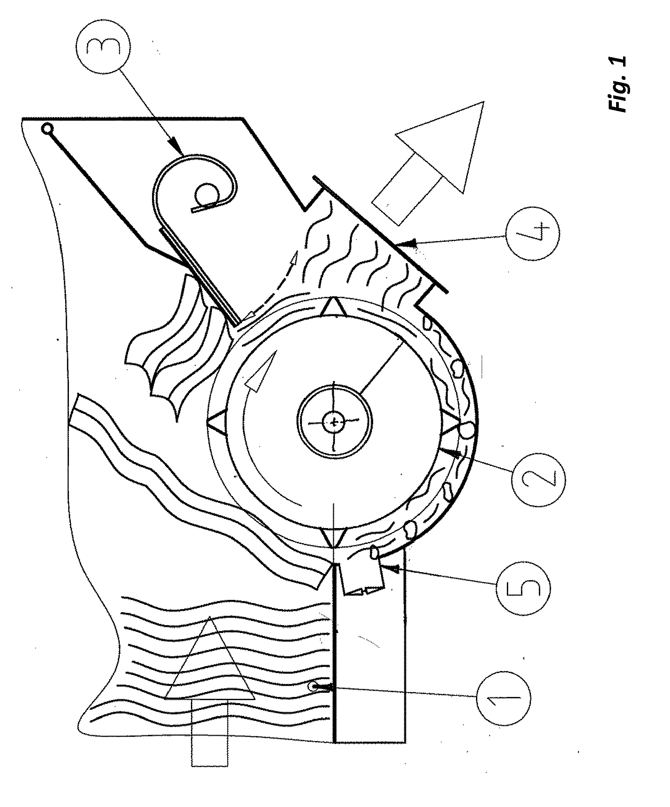

The invention will be described in the following with reference to figure 1, which shows a breaker house having:
Material (1) in pressed bale form which, as indicated in the figure, is broken up and is conveyed over a breaker roller (2) designed as an auger conveyor having a pitch of the windings being less than half the diameter on the roller, and where breaker knives, shown on the figure as four triangular protrusions, are mounted on the outer side of the windings. These breaker knives push the material against a resiliently supported counter blade (3) which prevents the material (1) from passing by without being broken up, but which also allows very packed up material, and larger foreign bodies from passing by without causing any blockage of the roller (2). Following the counter blade (3), the material (1) is led to an opening (4) where the material can be led out from the invention. Stones and other foreign bodies are led down to the bottom of the invention and transported upwards again by the breaker roller (2) to the region where the straw (1) enters into the invention, here an opening (5) is provided, through which stones and other foreign bodies can fall out.

## Claims

1. Straw bale breaker for breaking up and dividing biomass material (1), wherein one or more breaker rollers (2) comprising breaker knives are horizontally mounted, the straw bale breaker comprising feeding means for feeding the bionmass material (1) into the straw bale breaker and towards the one or more breaker rollers (2),
**characterized in that**
a feeding device is configured for conveying the biomass material (1) over the roller (2) and driving the biomass material (1) through stationary counter blades (3) on the rear side of the roller (2) by means of the dead weight of the biomass material (1) and the breaker knives of the roller (2).

2. Straw bale breaker according to claim 1, **characterized in that** the roller (2) is formed as an auger conveyor having a pitch of the windings of less than half the diameter of the roller (2).

3. Straw bale breaker according to claim 1 or 2, **characterized in that** one or more counter blades (3) are resiliently supported.

4. Straw bale breaker according to any one of claims 1 to 3, **characterized in that** the straw bale breaker is configured in such a way that foreign bodies which fall down through the roller (2) are conveyed back to an inlet for the material (1) where an opening (5) allows foreign bodies to leave the straw bale breaker.
